# EUROPEAN PATENT APPLICATION

(11) **EP 3 817 259 A1**
(43) Date of publication of application: **05.05.2021**
(21) Application number: 18923790.2
(22) Date of filing: 29.06.2018
(51) Int. Cl.: H04L 1/08, H04W 28/04

(54) **USER TERMINAL**

(71) Applicant: NTT DoCoMo, Inc., Tokyo 100-6150 (JP)
(72) Inventor: TAKEDA, Kazuki, Tokyo 100-6150 (JP); YOSHIOKA, Shohei, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/024912
(87) International publication number: WO 2020/003522

(57) **Abstract**

According to an aspect of the present disclosure, a user terminal includes a receiving section that receives information on a repetition transmission of either a first type or a second type in a given unit, and a control section that controls a reception process of a downlink shared channel in the given unit based on the information. According to the user terminal, it is possible to appropriately control reception of a channel/signal repeatedly transmitted in one or a plurality of types.

## Description

### Technical Field

The present disclosure relates to a user terminal in a next-generation mobile communication system.

### Background Art

In the UMTS (Universal Mobile Telecommunications System) network, the specifications of long-term evolution (LTE) have been specified for the purpose of further increasing high speed data rates, providing lower delays and the like (see Non Patent Literature 1). In addition, the specifications of LTE-A (LTE Advanced, LTE Rel. 10, 11, 12, 13) have been specified for the purpose of further increasing the capacity and sophistication of LTE (LTE Rel. 8, 9).

Successor systems of LTE are also under study (also referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14" "LTE Rel. 15 or later versions" and the like).

In the existing LTE system (for example, LTE Rel.8-14), the user terminal (UE: User Equipment) controls to receive a downlink shared channel (for example, PDSCH: Physical Downlink Shared Channel) based on downlink control information (DCI) (also referred to as DL assignment) transmitted via a downlink control channel (for example, PDCCH: Physical Downlink Control Channel). Also, the user terminal controls transmission of the uplink shared channel (for example, physical uplink shared channel (PUSCH)) based on the DCI (also referred to as UL grant).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR, 5G, 5G+ or Rel. 15 or later), it is being considered to perform a repetition transmission of at least one (channel/signal) of a given channel (for example, PDSCH, PUSCH, and the like) and a signal. The repetition transmission is considered to be useful for ultra reliable and low latency services such as URLLC (Ultra Reliable and Low Latency Communications).

For example, in Rel. 15 NR, it is being considered to perform a repetition transmission (also referred to as a first type (scheme or method) or the like) of channels/signals using at least one of a time domain resource, a frequency domain resource, a modulation and coding scheme (MCS) index, a DMRS configuration, and the like which are equally allocated to a given number of continuous slots.

Further, in Rel. 16 NR, it is being considered to introduce the repetition transmission (also referred to as a second type (scheme or method)) of parameters that can be controlled more flexibly than in Rel. 15 NR.

However, in the case where the repetition transmission of a plural types of different channels/signals is assumed, how to make different types of repetition transmission coexist in the same system becomes a problem. In addition, how the user terminal controls the reception of channels/signals repeatedly transmitted in one or more types becomes a problem.

Therefore, an object of the present disclosure is to provide a user terminal capable of appropriately controlling reception of channels/signals that are repeatedly transmitted in one or more types.

### Solution to Problem

According to an aspect of the present disclosure, a user terminal includes a receiving section that receives information on a repetition transmission of either a first type or a second type in a given unit, and a control section that controls a reception process of a downlink shared channel in the given unit based on the information.

### Advantageous Effects of Invention

According to an aspect of the present disclosure, it is possible to appropriately control the reception of the channels/signals that are repeatedly transmitted by one or more types.

### Brief Description of Drawings

Fig. 1 is a diagram illustrating an example of a repetition transmission of a PDSCH.
Figs. 2A and 2B are diagrams illustrating an example of a repetition transmission of a channel/signal using a plurality of TRPs.
Fig. 3 is a diagram illustrating an example of a flexible repetition transmission of the PDSCH.
Fig. 4 is a diagram illustrating another example of the flexible repetition transmission of the PDSCH.
Figs. 5A and 5B are diagrams illustrating an example of switching of a repetition transmission according to a first aspect.
Figs. 6A and 6B are diagrams illustrating an example of a repetition transmission according to a second aspect.
Figs. 7A and 7B are diagrams illustrating an example of a behavior of a second UE according to a third aspect.
Fig. 8 is a diagram illustrating an example of a schematic configuration of a radio communication system according to the present embodiment.
Fig. 9 is a diagram illustrating an example of an overall configuration of a radio base station according to the present embodiment.
Fig. 10 is a diagram illustrating an example of a functional configuration of the radio base station according to the present embodiment.
Fig. 11 is a diagram illustrating an example of an overall configuration of a user terminal according to the present embodiment.
Fig. 12 is a diagram illustrating an example of a functional configuration of the user terminal according to the present embodiment.
Fig. 13 is a diagram illustrating an example of a hardware configuration of the radio base station and the user terminal according to the present embodiment.

### Description of Embodiments

### (Inflexible Repetition Transmission)

In future radio communication systems (for example, NR, 5G, 5G+ or Rel. 15 or later), it is being considered to perform repetition transmission of at least one (channel/signal) of a channel and a signal. The channel/signal is, for example, PDSCH, PDCCH, PUSCH, PUCCH, DL-RS, uplink reference signal (UL-RS), and the like, but is not limited thereto.

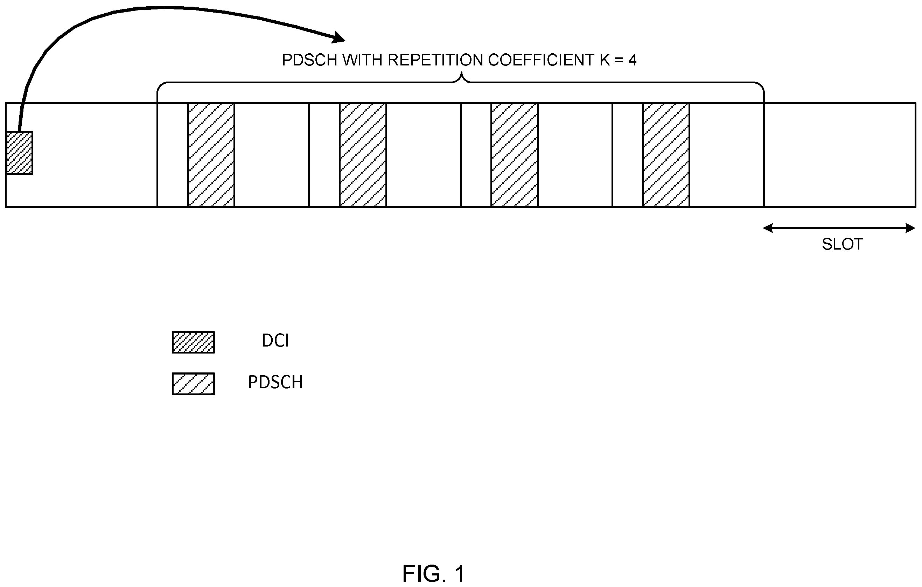

Fig. 1 is a diagram illustrating an example of a repetition transmission of a PDSCH. Fig. 1 illustrates an example where a single DCI schedules a given number of repetitive PDSCHs. The number of such repetitions is also referred to as a repetition factor K or an aggregation factor K. For example, in Fig. 1, the repetition factor K = 4, but a value of K is not limited thereto. Further, an n-th repetition is also called an n-th transmission occasion, and the like, and may be identified by a repetition index k (0 ≤ k ≤ K - 1).

For example, in Fig. 1, the user terminal receives information indicating the repetition factor K by higher layer signaling. Here, the higher layer signaling may be, for example, any of RRC (Radio Resource Control) signaling, MAC (Medium Access Control) signaling, broadcast information and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

As illustrated in Fig. 1, the user terminal detects the DCI that schedules PDSCH that is repeatedly transmitted in a serving cell or a partial band (Bandwidth Part (BWP)) in the serving cell. The BWP may include a BWP (UL BWP, uplink BWP) for an uplink (UL) and a BWP (DL BWP, downlink BWP) for a downlink (DL).

The user terminal may monitor the CORESET (a set (SS set) of one or more search spaces associated with the CORESET or the PDCCH candidate that configures the SS set) configured in the DL BWP to detect the DCI. The user terminal receives the PDSCH from the slot in which the DCI is detected in K continuous slots after a given duration. Note that the serving cell is also called a carrier, a component carrier (CC), a cell, or the like.

Specifically, the user terminal controls PDSCH reception processes (for example, at least one of reception, demapping, demodulation, and decoding) in K continuous slots based on at least one of the following field values (or information indicated by the field values) within the DCI:
- Allocation of time domain resources (for example, start symbol, the number of symbols in each slot, and the like),
- Allocation of frequency domain resources (for example, a given number of resource blocks (RBs), a given number of resource block groups (RBGs)),
- Modulation and Coding Scheme (MCS) index,
- Demodulation reference signal (DMRS) configuration of PDSCH, and
- Transmission Configuration Indication or Transmission Configuration Indicator (TCI) state (TCI-state).

The user terminal controls the reception of the PDSCH in each slot on the assumption that configurations of the time domain resource allocated to PDSCH between K (K = 4 in Fig. 1) continuous slots that are semi-statically configured by the higher layer signaling, the same frequency domain resource, the MCS index, and the DMRS are the same. That is, the user terminal assumes that the above field values in a single DCI are applied to all K continuous slots.

On the other hand, the user terminal controls the reception of the PDSCH in each slot on the assumption that a redundancy version (RV) applied to the PDSCH is changed in a given order (for example, 0 → 2 → 3 → 1) between the K continuous slots.

### (Repetition Transmission of Multi-TRP)

In addition, in the above-described future radio communication system, in order to improve robustness, it is also considered to perform a repetition transmission of channels/signals using a plurality of transmission and reception points (TRPs).

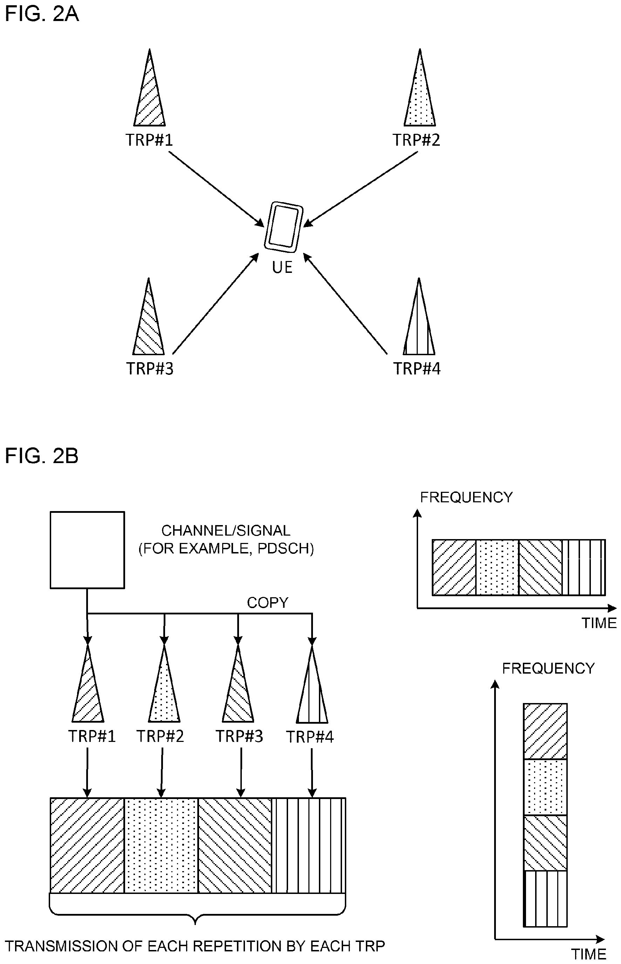

Figs. 2A and 2B are diagrams illustrating an example of a repetition transmission of a channel/signal using a plurality of TRPs. For example, Figs. 2A and 2B illustrate an example of the repetition transmission of the PDSCH using TRPs #1 to #4. Note that Fig. 2A illustrates an example in which geographical positions (TCI states) of the TRPs #1 to #4 are different, but the present embodiment is not limited thereto. The TRPs #1 to #4 may be different antenna panels installed at the same transmission location. Further, the number of TRPs used for the repetition transmission is not limited to the one shown in the drawings.

As illustrated in Fig. 2B, the same PDSCH (or DL data) may be copied to the plurality of TRPs and the PDSCHs may be transmitted repeatedly. Here, the "copying DL data" means copying at least one of an information bit sequence configuring DL data, a code block (CB), a code block group (CBG) including one or more code blocks, a transport block (TB), and a coded code word sequence.

Alternatively, the "copying DL data" does not necessarily represent copying of all the same bit strings, but means copying at least a part of a code word generated from the same information bit string, or at least a part of a modulation symbol sequence. For example, among a plurality of copied DL data, the RVs of the code words obtained by encoding a certain information bit sequence may be the same or different. Alternatively, the plurality of copied DL data may be a modulation symbol sequence obtained by modulating different RVs or the same RV. In addition, the plurality of copied DL data are all transmitted as the PDSCH. The PDSCH may be repeated in at least one of the time domain and the frequency domain with different resources.

For example, as illustrated in Fig. 2B, the PDSCH may be repeated with resources (for example, one or more slots) that have the same frequency domain and are continuous in the time domain. Alternatively, the PDSCH may be repeated with resources having the same time domain and continuous in the frequency domain (for example, one or more RBs or one or more RBGs). Each repetition may be transmitted to different TRPs.

Further, Fig. 2B illustrates a case where the PDSCH is transmitted to different TRPs per one repetition, but the present embodiment is not limited thereto, and the PDSCH can be transmitted to different TRPs for each given number of repetitions (one or more repetitions).

In addition, the "TRP" may be paraphrased with a network, a radio base station, an antenna apparatus, an antenna panel, a serving cell, a cell, a component carrier (CC), a carrier, or the like. Further, for different transmission/reception signals or channels, the "TRP is the same" is paraphrased as having the TCI state, QCL or QCL relationships that are the same between the different transmission/reception signals or channels or between their reference signals. Further, for different transmission/reception signals or channels, the "TRP is different" is paraphrased as the TCI state, QCL or QCL relationships that are different between the different transmission/reception signals or channels or between the reference signals.

In Figs. 2A and 2B, the "transmitting a plurality of channels/signals from different TRPs" is synonymous with different TCI states among the plurality of channels/signals. When receiving a plurality of channels/signals having different TCI states, the user terminal may be assumed that the plurality of channels/signals are transmitted from different TRPs. Therefore, the "receiving a channel/signal transmitted from a different transmission/reception point for each given number of repetitions" means receiving a channel/signal having a different TCI state for each given number of repetitions.

The TCI state may indicate (may include) information (QCL information) on a given channel/signal quasi-co-location (QCL). The QCL is an indicator indicating the statistical properties of the channel/signal. For example, it may be mean that when one signal and other signals have a QCL relationship, it may be assumed that at least one of Doppler shift, Doppler spread, average delay, delay spread (delay), and spatial parameter (for example, Spatial Rx Parameter) is identical (QCL for at least one of them) between the plurality of different signals.

The TCI state is identified by a given identifier (TCI State ID (TCI-StateId)). Each TCI state may include at least one of, for example, information (one or more DL-RSs, resources for the DL-RS, and the like) on another downlink reference signal (DL-RS) having the QCL relationship with the target channel/signal (or DMRS for the channel, antenna ports of the DMRS, or group of the antenna ports) and information on the type of the QCL, the carrier (cell) where the DL-RS is arranged, and the BWP.

The DL-RS may be at least one of, for example, a synchronization signal (SS), a broadcast channel (PBCH: Physical Broadcast Channel), a synchronization signal block (SSB: Synchronization Signal Block), a mobility reference signal (MRS: Mobility RS), and a channel state information-reference signal (CSI-RS), CSI-RS for tracking, a beam-specific signal, and the like, or may be a signal (for example, signal configured by changing at least one of a density and a cycle) configured by expanding or modifying these signals.

The synchronization signal may be, for example, at least one of a primary synchronization signal (PSS) and a secondary synchronization signal (SSS). The SSB is a signal block including the synchronization signal and the broadcast channel, and may be called an SS/PBCH block or the like.

For example, the TCI state for the PDCCH may include information on the DL-RS having the QCL relationship with the DMRS (the antenna port (DMRS port) of the DMRS or the group of the DMRS ports (DMRS port group)) of the PDCCH, and the like.

One or more TCI states may be configured for each control resource set (CORESET) configured on the user terminal. The user terminal may control the reception process of the PDCCH based on the TCI state associated with the CORESET.

In addition, the TCI state for the PDSCH may include information on the DL-RS having the QCL relationship with the DMRS (DMRS port or DMRS port group) of the PDSCH.

The user terminal is configured with M (M ≥ 1) TCI states for the PDSCH, and a single TCI state may be designated by a given field within a DCI (for example, may be referred to as a field for TCI, a TCI field, a TCI state field, and the like).

However, as illustrated in Fig. 1, when the PDSCH is repeatedly transmitted using the time domain resource, the frequency domain resource, the MCS index, the DMRS configuration, and the like that are equally allocated among K continuous slots, as illustrated in Figs. 2A and 2B, there is a risk that it is not possible to obtain a sufficient gain due to the repetition transmission using the plurality of TCI states (TRPs). Similar problems can occur even in the repetition transmission using the same TCI state (TRP).

### (Flexible Repetition Transmission)

Therefore, it is also considered to more flexibly control the repetition transmission of the PDSCH. The repetition transmission may be performed using the same TCI state (TRP), or may be performed using different TCI states (TRP) for each given number of repetitions (for example, one repetition).

The PDSCH may be repeated over at least one of the continuous frequency domain resources and the discontinuous frequency band. Here, the frequency band may be, for example, at least one of one or more BWP and one or more CC.

In addition, the PDSCH may be repeated over at least one of the continuous time domain units and the discontinuous time domain unit. Here, the time domain unit may be, for example, one or more slots.

At least one of the following may be kept identical between at least two repetitions of the PDSCH:
- Transport Block Size (TBS), and
- HARQ process number (HPN: Hybrid Automatic Repeat reQuest Process Number).

Meanwhile, at least one of the following may be different between at least two repetitions of the PDSCH:
- Time domain resources (for example, start symbol of PDSCH in slot, the number of symbols assigned to PDSCH in slot, and the like) allocated to PDSCH,
- Frequency domain resources (for example, a given number of RBs or RBGs allocated to PDSCH) allocated to PDSCH,
- MCS index of PDSCH,
- MIMO (Multi Input Multi Output) configuration (also called the number of transport blocks (TBs), the number of layers, and the like),
- RV applied to the PDSCH,
- The number of code block groups (CBGs) in 1 TB,
- PUCCH resource used to transmit delivery acknowledgment information (HARQ-ACK: Hybrid Automatic Repeat reQuest-Acknowledge, called ACK or NACK, A/N, and the like) to PDSCH,
- TPC command for PUCCH used to transmit HARQ-ACK,
- Feedback timing of HARQ-ACK,
- TCI state, and
- DMRS sequence of PDSCH.

At least two repetitions of the PDSCH may be scheduled by different DCIs. For example, each repetition of the PDSCH with the repetition factor K may be scheduled by a different DCI, or some of the repetitions may be scheduled by a different DCI. Also, the DCI that schedules one repetition may be a single DCI or a plurality of DCIs (for example, two-step DCI).

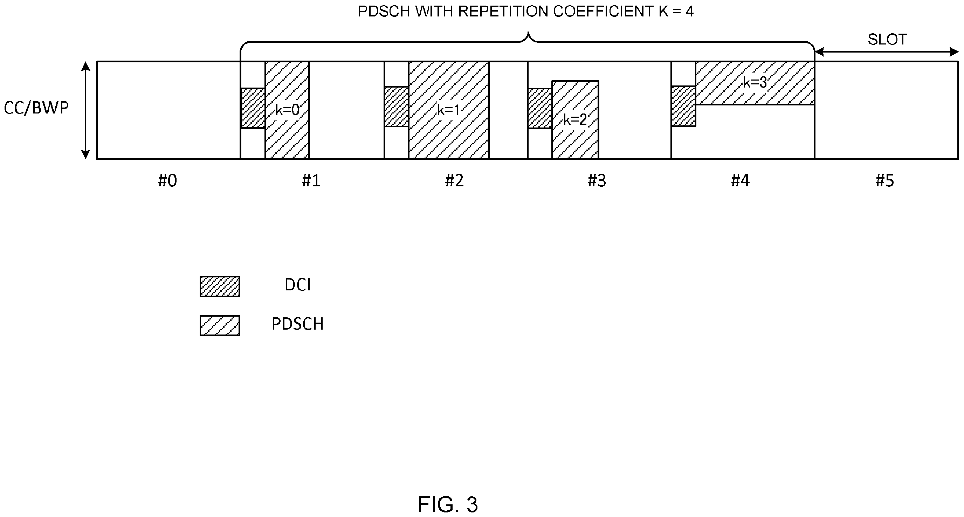

Fig. 3 is a diagram illustrating an example of the flexible repetition transmission of the PDSCH. Fig. 3 illustrates an example in which K DCIs schedule K repetitions in the PDSCH time domain, respectively. In Fig. 3, K = 4, but the value of K is not limited thereto. Further, the repetition factor K may or may not be configured in the user terminal by the higher layer signaling.

Further, in Fig. 3, the PDSCH is repeatedly transmitted in K continuous slots, but at least one of the K slots may not be continuous. Further, in Fig. 3, the PDSCH is repeatedly transmitted in the same frequency band (for example, CC or BWP), but at least one of the K frequency bands may be different. In addition, each repetition may be transmitted from a different TRP (may be in a different TCI state).

In Fig. 3, the user terminal monitors (blindly decodes) PDCCH candidates (also referred to as search space (SS) set and the like including one or more search spaces (SSs)) configured in each slot. For example, in Fig. 3, the user terminal detects K DCIs (here, four DCIs) in K slots (here, #1 to #4), and controls the reception of the PDSCH having the repetition index k = 0 to K - 1 (here, k = 0 to 3) scheduled by the K DCIs, respectively.

As illustrated in Fig. 3, the frequency domain resource (for example, the number of RBs), the time domain resource (for example, the number of symbols), and the like allocated to the PDSCH may be different between at least two repetitions. Note that in Fig. 3, the position of the start symbol of the PDSCH is the same between the repetitions, but the position of the start symbol and the like may be different.

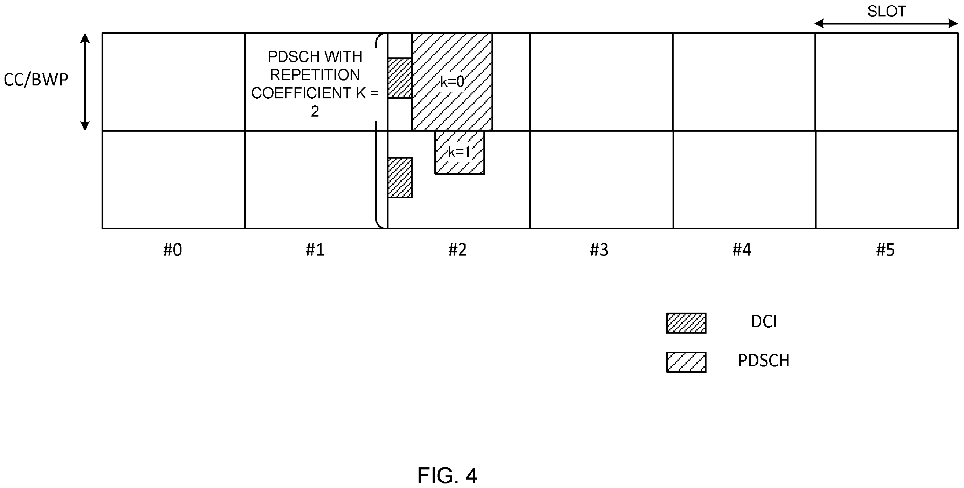

Fig. 4 is a diagram illustrating another example of the flexible repetition transmission of the PDSCH. Fig. 4 differs from Fig. 3 in that the repetition is performed K times in the frequency domain instead of the time domain. In the following, the difference from Fig. 3 will be mainly described.

As illustrated in Fig. 4, K DCIs may each schedule the repetition transmission of the PDSCH in different K frequency bands (for example, CC or BWP). For example, in Fig. 4, K = 2, and the PDSCH with repetition indexes k = 0 and 1 is transmitted at 2 CC or 2 BWP. Note that each repetition may be transmitted from a different TRP (may be in a different TCI state).

For example, in Fig. 4, the user terminal detects K DCIs (here, two DCIs) in a slot (here, slot #2), and controls the reception of the PDSCH having the repetition index k = 0 to K - 1 (here, k = 0 to 1) each scheduled by the K DCIs.

One or more frequency bands (for example, one or more CC or BWP (CC/BWP) sets (CC/BWP set)) for the repetition transmission of the PDSCH (TB) are configured in the user terminal by the higher layer signaling. One or more frequency bands in which the PDSCH (TB) is actually repeated may be at least a part (subset) of the frequency band configured in the user terminal.

In the user terminal, a given duration (for example, one or more slots) for the repetition transmission of the PDSCH (TB) may be defined in advance, or may be configured by the higher layer signaling. The duration may be, for example, the duration from the first repetition to the last repetition of the PDSCH, or the duration from the PDCCH scheduling the PDSCH to the last repetition.

In this way, it is assumed that for the repetition transmission of the channel/signal, there are a plurality of types (scheme or method) such as the inflexible repetition transmission (for example, Fig. 1 and the like) and the flexible repetition transmission (for example, Figs. 2 to 4 and the like).

Therefore, how to co-existence a plurality of types related to the repetition transmission of the channel/signal in the same system becomes a problem. Therefore, the present inventors have focused on switching the plurality of types by higher layer signaling (first aspect) or applying a combined type (hybrid type) of the plurality of types (second aspect).

In addition, the present inventors have examined the behavior of the user terminal regarding the switching of at least one of the types and parameters when the repetition transmission is started (in the middle of the repetition) (third aspect).

Hereinafter, the present embodiments will be described with reference to the drawings.

### (First Aspect)

In the first aspect, either the first type of repetition transmission or the second type of repetition transmission is used to transmit the TB. That is, the first type of repetition transmission or the second type of repetition transmission is switched in a given unit, and the first and second types of repetition transmissions are not used at the same time in the same unit. The given unit is, for example, a cell, a cell group, a PUCCH group, a BWP, or an HPN of a given range (for example, HPNs #0 to #7 and #8 to #15).

Here, the first type of repetition transmission (scheme and method) is, for example, the inflexible repetition transmission illustrated in Fig. 1. As described in Fig. 1, in the first type of repetition transmission, all the repetitions may be transmitted from the same TRP (using the same TCI state).

In the first type of repetition transmission, given parameters (for example, see the description of the "inflexible repetition transmission") may be common (same) between the repetitions. These parameters may be specified by a single DCI that schedules all the repetitions.

Here, the second type (scheme and method) of repetition transmission is, for example, the repetition transmission of the multi-TRP illustrated in Fig. 2 and the flexible repetition transmission illustrated in Figs. 3 and 4. In the second type of repetition transmission, the PDSCH may be transmitted from the plurality of different TRPs for each given number of repetitions (for example, one repetition) (PDSCH may be received using a plurality of TCI states). Alternatively, the PDSCH may be transmitted from the same TRP between the repetitions (PDSCH may be received using the same TCI state).

In the second type of repetition transmission, given parameters (for example, see the description of the "flexible repetition transmission") may be designated for each repetition. These parameters may be designated by a single DCI that schedules all the repetitions, or may be designated by the DCI for each repetition.

The user terminal receives information on the repetition transmission of either the first type or the second type. For example, the user terminal may receive the information by the higher layer signaling. Specifically, the user terminal may receive the information on either the first type or the second type of repetition transmission in a given unit (for example, for each cell, cell group, PUCCH group, BWP or HPN within a given range).

Here, the information on the first type of repetition transmission may include, for example, a repetition factor (aggregation factor) K. In addition, the information on the second type of repetition transmission includes, for example, a maximum repetition factor (aggregation factor) K, a repetition duration (time period during which repetition transmission of a specific TB can occur), and a repetition carrier (frequency or carrier range in which the repetition transmission of a specific TB can occur), two or more TCI states applied to each repetition, and the like.

The user terminal may configure either the first type of repetition transmission or the second type of repetition transmission in a given unit (for example, for each cell, cell group, PUCCH group, BWP or HPN within the given range) based on the received information.

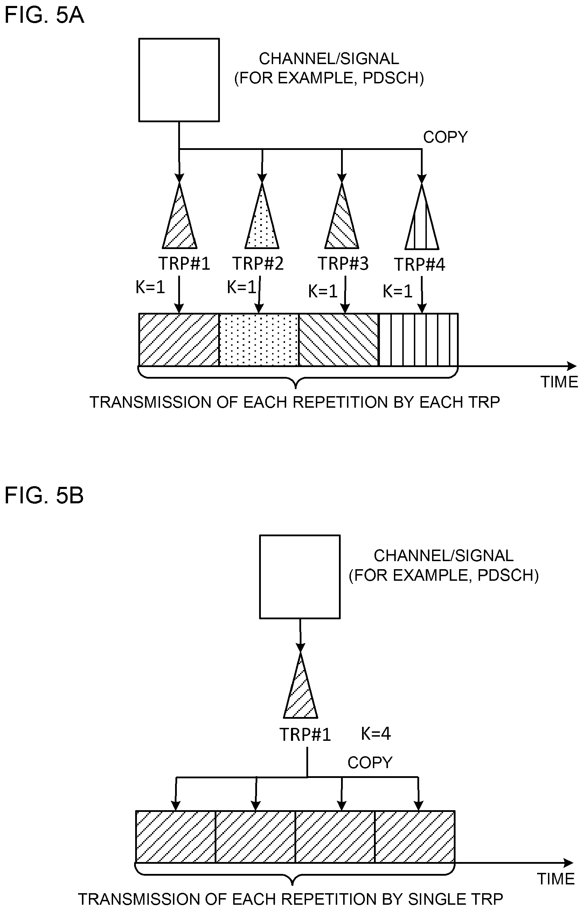

Figs. 5A and 5B are diagrams illustrating an example of switching the repetition transmission according to the first aspect. Fig. 5A illustrates an example of the second type of repetition transmission. Fig. 5B illustrates an example of the first type of repetition transmission.

In Fig. 5A, the user terminal may receive the information on the second type of repetition transmission in a given unit (for example, cell, cell group, PUCCH group, BWP or HPN within a given range), and configure the second type of repetition transmission in the given unit based on the information. For example, in Fig. 5A, the PDSCH is repeated four times and transmitted once from different TRPs #1 to #4, respectively.

In Fig. 5A, the user terminal may control the reception process of the PDSCH in the given unit based on the TCI state for each repetition. The TCI state for each repetition may be indicated by either the DCI common between the repetitions or the DCI for each repetition. In addition, the user terminal may also control the reception process of the PDSCH based on other parameters (see, for example, the description of the "flexible repetition transmission") for each repetition.

Meanwhile, in Fig. 5B, the user terminal receives the information on the first type of repetition transmission in a given unit (for example, cell, cell group, PUCCH group, BWP or HPN within the given range), and configures the first type of repetition transmission based on the information. For example, in Fig. 5B, the PDSCH is repeated four times and transmitted four times from the same TRP #1.

In Fig. 5B, the user terminal may control the reception process of the PDSCH in the given unit based on the TCI state common between the repetitions. The TCI state may be indicated by a DCI common between the repetitions. In addition, the user terminal may also control the reception process of the PDSCH based on other parameters (see, for example, the description of the "inflexible repetition transmission") common between the repetitions and the parameters (for example, RV) for each repetition.

In the first aspect, either the first type of repetition transmission or the second type of repetition transmission is semi-statically switched, so the reception process of the PDSCH repeatedly transmitted can be easily controlled even when a plurality of types of repetition transmission coexist.

### (Second Aspect)

In the second aspect, the first type of repetition transmission or the second type of repetition transmission are combined (referred to as the hybrid type or the like) and are used to transmit the TB.

That is, in the second type of repetition transmission, when the PDSCH is transmitted from different TRPs for each given number of repetitions (for example, one repetition) in the time domain, the PDSCH from the same TRP may be repeatedly transmitted in the frequency domain.

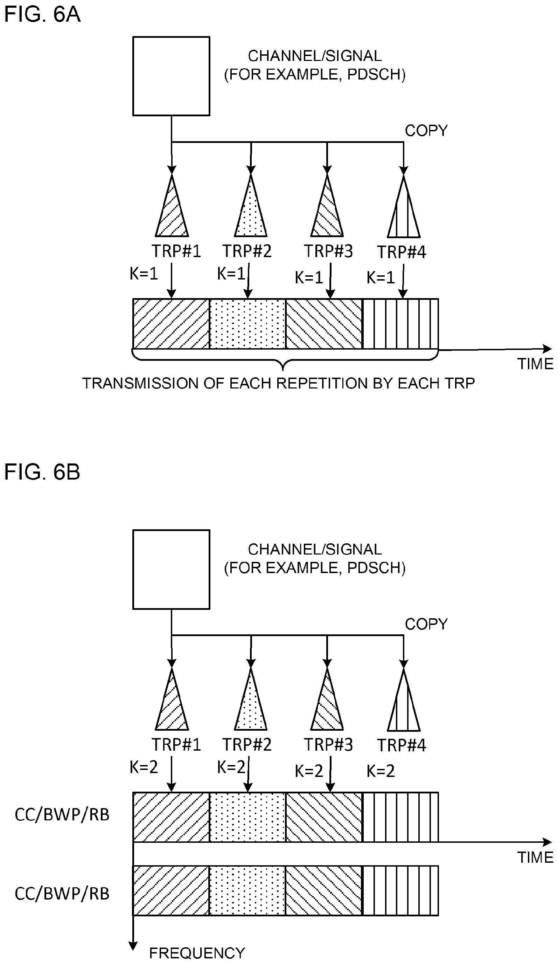

Figs. 6A and 6B are diagrams illustrating an example of a repetition transmission according to a second aspect. Fig. 6A illustrates an example of the second type of repetition transmission. Fig. 6A is similar to Fig. 5A. Fig. 6B illustrates an example of repetition transmission of the hybrid type of the first type and the second type.

In Fig. 6B, the user terminal receives repetition PDSCHs in both the time domain (for example, slots) and the frequency domain (for example, CC, BWP, or a given number of RBs). For example, in Fig. 6B, the PDSCH is repeated four times in the time domain and two times in the time domain. In Fig. 6B, the repetition in the time domain is transmitted from different TRPs #1 to #4, and the repetition in the frequency domain is transmitted from the same TRP. Therefore, TRP #1 to #4 each repeat PDSCH twice.

In Fig. 6B, the user terminal controls the reception process of the PDSCH repetition in both the time domain (for example, slot) and the frequency domain (for example, CC, BWP, or a given number of RBs) based on the TCI state for each given number of repetitions (for example, one repetition) in the time domain.

Note that in Fig. 6B, the PDSCH is transmitted from different TRPs for each given number of repetitions in the time domain, and the PDSCH is transmitted from the same TRP between the repetitions in the frequency domain, but the present embodiment is not limited thereto. For example, although not illustrated, the PDSCH may be transmitted from different TRPs for each given number of repetitions in the frequency domain, and the PDSCH may be transmitted from the same TRP between the repetitions in the time domain.

In this way, the user terminal may control the reception process of the PDSCH repetition in both the time domain and the frequency domain based on the TCI state for each given number of repetitions in either the time domain or the frequency domain.

In addition, other parameters (for example, see the description of the "flexible repetition transmission") other than the TCI state may also be different for each given number of repetitions in the time domain (or frequency domain), and may be common between the repetitions in the frequency domain (or time domain). The user terminal may control the reception process of the PDSCH repetition in both the time domain and the frequency domain based on the other parameters.

Further, in the second aspect, the user terminal may receive the information on the hybrid type of repetition transmission and configure the hybrid type of repetition transmission based on the information. For example, the user terminal may receive the information by the higher layer signaling.

Specifically, the user terminal may receive the information on the hybrid type of repetition transmission in the given unit (for example, for each cell, cell group, PUCCH group, BWP or HPN within the given range).

Here, the information on the hybrid type of repetition transmission may include, for example, the overall repetition factor (aggregation factor) K (or the maximum aggregation factor K), the repetition factor (or maximum repetition factor) of the time domain, the repetition factor (or maximum repetition factor) of the frequency domain, and a parameter indicating whether or not the hybrid type of repetition transmission is applied.

In the second aspect, since the hybrid type of repetition transmission is used, even when the plurality of types of repetition transmissions coexist, as described in the first aspect, it is not necessary to perform the switching control of the plurality of types of repetition transmissions, and is possible to reduce the processing load of the user terminal due to the switching control.

### (Third Aspect)

In a third aspect, the behavior of the user terminal after the start of the repetition transmission of the PDSCH (in the middle of the repetition) will be described.

The user terminal may not assume (behavior of first UE) or may assume (behavior of second UE) that at least one of the type and parameter is switched (also referred to as change, adjust, or the like) when the repetition transmission is started (in the middle of the repetition).

### <Behavior of First UE>

In the behavior of the first UE, the user terminal may not assume that the type of repetition transmission is switched if the repetition transmission of the PDSCH is started (or if DCI that schedules the PDSCH is detected).

For example, when the first type of repetition transmission (for example, Fig. 1) is configured for the PDSCH, if the DCI that schedules all the repetitions of the PDSCH is detected (or if the reception of the first repetition is started), the user terminal may not expect switching to the second type of repetition transmission in the middle of the repetition.

Meanwhile, when the second type of repetition transmission (for example, Figs. 2 to 4) is configured for the PDSCH, if the DCI that schedules the PDSCH for each repetition is detected (or if the reception of the first repetition is started), the user terminal may not expect switching to the first type of repetition transmission in the middle of the repetition.

In this case, the radio base station controls the specific user terminal so as not to switch the type of repetition transmission in the middle after starting the repetition transmission of the PDSCH.

### <Behavior of Second UE>

In the behavior of the second UE, the user terminal may assume that at least one of the type and parameter of repetition transmission is switched even when the repetition transmission of the PDSCH is started (or even when the DCI that schedules the PDSCH is detected).

In this case, the radio base station can control the specific user terminal so as not to switch the type of repetition transmission in the middle after starting the repetition transmission of the PDSCH.

### <<When First Type is Configured>>

For example, when the first type of repetition transmission (for example, Fig. 1) is configured for the PDSCH, even when it detects the DCI that schedules all the repetitions of the PDSCH (or even when the reception of the first repetition is started), the user terminal may expect switching to the second type of repetition transmission in the middle of the repetition.

In addition, when the first type of repetition transmission (for example, Fig. 1) is configured for the PDSCH, even when it detects the DCI that schedules all the repetitions of the PDSCH (or even when the reception of the first repetition is started), the user terminal may expect switching to the parameter in the middle of the repetition.

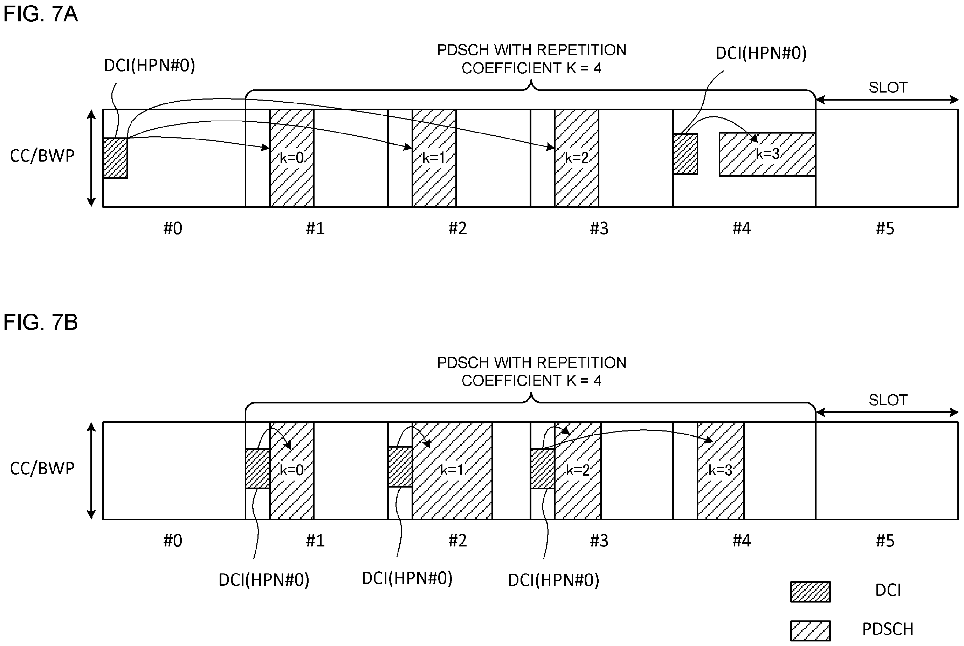

Fig. 7A is a diagram illustrating an example of a behavior of a second UE according to the third aspect. In Fig. 7A, it is assumed that the first type of repetition transmission is configured with the repetition factor K = 4. In Fig. 7A, even when the DCI that schedules all the PDSCH repetitions (here, four repetitions) is detected (or when the repetition is started), the user terminal may monitor CORESET (or SS set) in each slot.

For example, in Fig. 7A, another DCI is detected in slot #4 in the middle of the repetition transmission. In Fig. 7A, the another DCI may override (change and switch) parameters designated by the DCI detected in slot #0.

The parameter to be overridden may be, for example, at least one of the following:
- Allocation of time domain resources (for example, start symbol, the number of symbols in each slot, and the like) to PDSCH,
- Allocation of frequency domain resources (for example, a given number of RBs, a given number of RBGs) to PDSCH,
- MCS index,
- DMRS configuration of PDSCH,
- TCI state,
- RV applied to PDSCH,
- The number of CBGs within 1 TB,
- PUCCH resource used to transmit HARQ-ACK for PDSCH,
- TPC command for PUCCH used to transmit HARQ-ACK,
- Feedback timing of HARQ-ACK,
- DMRS sequence of PDSCH, and
- Repetition factor K.

Note that in Fig. 7A, the DCIs detected in both slots #0 and #4 may each indicate the same HPN. Further, a new data identifier (NDI: New Data Indicator) of the DCI may be configured in common and may not be toggled together, or may be toggled together. In addition, each of the DCIs may indicate the same counter DAI (counter Downlink Assignment Index). In addition, the MCS index within the DCI may be designated as a value that equalizes the TBS determined based on the MCS index.

The user terminal may control the soft combining of the PDSCH (TB) scheduled by the DCI based on at least one of the HPN and the counter DAI within the DCI. Specifically, if the values of the HPN (or counter DAI) within the DCI is the same, the PDSCH (TB) may be soft-combined.

### <<When Second Type is Configured>>

Meanwhile, when the second type of repetition transmission (for example, Figs. 2 to 4) is configured for the PDSCH, even when the DCI that schedules the PDSCH for each repetition is detected (or even when the reception of the first repetition is started), the user terminal may expect switching to the second type of repetition transmission in the middle of the repetition.

In addition, when the first type of repetition transmission (for example, Figs. 2 to 4) is configured for the PDSCH, even when the DCI that schedules the PDSCH for each repetition is detected (or even when the reception of the first repetition is started), the user terminal may expect switching the parameter in the middle of the repetition.

Fig. 7B is a diagram illustrating another example of a behavior of a second UE according to the third aspect. In Fig. 7B, it is assumed that the second type of repetition transmission is configured with the repetition factor K = 4. In Fig. 7B, even when the DCI that schedules each repetition index 0 and 1 is detected (or when the PDSCH of the repetition indexes 0 and 1 is received), the user terminal may monitor CORESET (or SS set) in each slot.

For example, in Fig. 7B, another DCI is detected in slot #3 in the middle of the repetition transmission. Here, the other DCI schedules type 1 repetition transmission, but the PDSCH overridden by different parameters in type 2 repetition transmission may be scheduled.

In Fig. 7B, the another DCI may override (change and switch) parameters designated by the DCI detected in slots #1 and #2. The parameter to be overridden may be at least one of the parameters described in Fig. 7A.

Note that in Fig. 7B, the DCIs detected in slots #1, #2, and #3 may each indicate the same HPN. Further, the NDI of the DCI may be configured in common and may not be toggled together, or may be toggled together. In addition, each of the DCIs may indicate the same counter DAI. In addition, the MCS index within the DCI may be designated as a value that equalizes the TBS determined based on the MCS index.

The user terminal may control the soft combining of the PDSCH (TB) scheduled by the DCI based on at least one of the HPN and the counter DAI within the DCI. Specifically, if the values of the HPN (or counter DAI) within the DCI is the same, the PDSCH (TB) may be soft-combined.

In the third aspect, since at least one of the type and parameter of repetition transmission is dynamically switched, the repetition transmission of the PDSCH can be flexibly controlled even when the plurality of types of repetition transmissions coexist.

### (Other Aspects)

In the first to third aspects, it is described that the PDSCH of each repetition (each repetition index k) is arranged in the CORESET (or SS set) within the same frequency band as the frequency band (for example, CC/BWP) in which the PDSCH is scheduled, but the PDSCH of each repetition (each repetition index k) is not limited thereto.

The PDSCH of each repetition may be arranged in the CORESET (or SS set) within the same frequency band as the frequency band (for example, CC/BWP) in which the PDSCH is scheduled. That is, the PDSCH of each repetition may be scheduled in cross carrier (cross CC) or cross BWP (cross CC/BWP).

In addition, the third aspect can be combined with not only the first aspect but also the second aspect. For example, in the second aspect, when the parameter for each repetition is designated by a single DCI, the parameters may be overridden by the DCI detected in the middle of the repetition.

Further, the first to third aspects are not limited to the downlink channel/signal such as PDSCH, and can also be applied to the uplink channel/signal such as PUSCH. For the PDSCH, the dynamic scheduling by the DCI (DL assignment) may be applied, or semi-static scheduling by semi-persistent scheduling (SPS) may be applied. Similarly, the PUSCH may be dynamically scheduled by the DCI (UL grant) or resources may be allocated by configure grant.

### (Radio Communication System)

Now, the structure of a radio communication system according to the present embodiment will be described below. In this radio communication system, communication is performed using one or a combination of the radio communication methods according to the embodiments of the present disclosure.

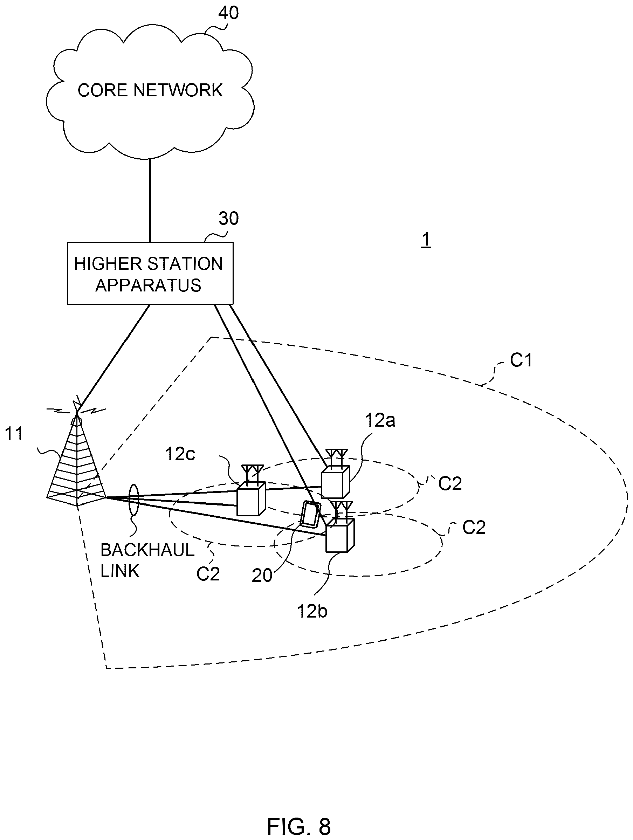

Fig. 8 is a diagram illustrating an example of a schematic configuration of the radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and the like, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number and the like of cells and user terminals 20 are not limited to those illustrated in the drawings.

The user terminals 20 can connect with both the radio base station 11 and the radio base stations 12. It is assumed that the user terminals 20 uses the macro cell C1 and the small cells C2 at the same time using CA or DC. Furthermore, the user terminals 20 may apply CA or DC using a plurality of cells (CCs).

Between the user terminals 20 and the radio base station 11, communication can be carried out using a carrier of a relatively low frequency band (for example, 2 GHz) and a narrow bandwidth (referred to as an "existing carrier," a "legacy carrier" and the like). Meanwhile, between the user terminals 20 and the radio base stations 12, a carrier of a relatively high frequency band (for example, 3.5 GHz, 5 GHz, and the like) and a wide bandwidth may be used, or the same carrier as that used between the user terminals 20 and the radio base station 11 may be used. Note that the configuration of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and the like. For example, for a certain physical channel, when the subcarrier spacing differs and/or the numbers of OFDM symbols are different between the constituent OFDM symbols, this case may be described that they are different in numerology.

The radio base station 11 and the radio base station 12 (or two radio base stations 12) may be connected by wire (for example, means in compliance with the common public radio interface (CPRI) such as optical fiber, an X2 interface, and the like) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and the like, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," an "aggregate node," an "eNB (eNodeB)," a "transmitting/receiving point" and the like. Also, the radio base stations 12 are radio base stations having local coverages, and may be referred to as "small base stations," "micro base stations," "pico base stations," "femto base stations," "HeNBs (Home eNodeBs)," "RRH (Remote Radio Head)," "transmitting/receiving points" and the like. Hereinafter the radio base stations 11 and 12 will be collectively referred to as "radio base stations 10," unless specified otherwise.

The user terminals 20 are terminals to support various communication schemes such as LTE, LTE-A and the like, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared Channel)), which is used by each user terminal 20 on a shared basis, a broadcast channel (PBCH (Physical Broadcast Channel)), downlink L1/L2 control channels and the like are used as downlink channels. User data, higher layer control information and SIBs (System Information Blocks) are transmitted by the PDSCH. Further, MIB (Master Information Block) is transmitted by PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and the like. Downlink control information (DCI), including PDSCH and/or PUSCH scheduling information, and the like, is transmitted by the PDCCH.

DCI that schedules receipt of DL data may also be referred to as "DL assignment," and DCI that schedules transmission of UL data may also be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs" and the like) in response to the PUSCH is communicated by the PHICH. The EPDCCH is frequency-division-multiplexed with the PDSCH (downlink shared data channel) and used to communicate with DCI and the like, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and the like are used as uplink channels. User data, higher layer control information, and so on are communicated by the PUSCH. Also, in the PUCCH, downlink radio quality information (CQI (Channel Quality Indicator)), delivery acknowledgment information, scheduling requests (SRs) and the like are communicated. By means of the PRACH, random access preambles for establishing connections with cells are communicated.

In the radio communication systems 1, cell-specific reference signals (CRSs), channel state information-reference signals (CSI-RSs), demodulation reference signals (DMRSs), positioning reference signals (PRSs) and the like are communicated as downlink reference signals. Also, in the radio communication system 1, measurement reference signals (Sounding Reference Signals (SRSs)), demodulation reference signals (DMRSs), and the like are communicated as uplink reference signals. Note that, DMRSs may be referred to as "user terminal-specific reference signals (UE-specific Reference Signals)." Also, the reference signals to be communicated are by no means limited to these.

### <Radio Base Station>

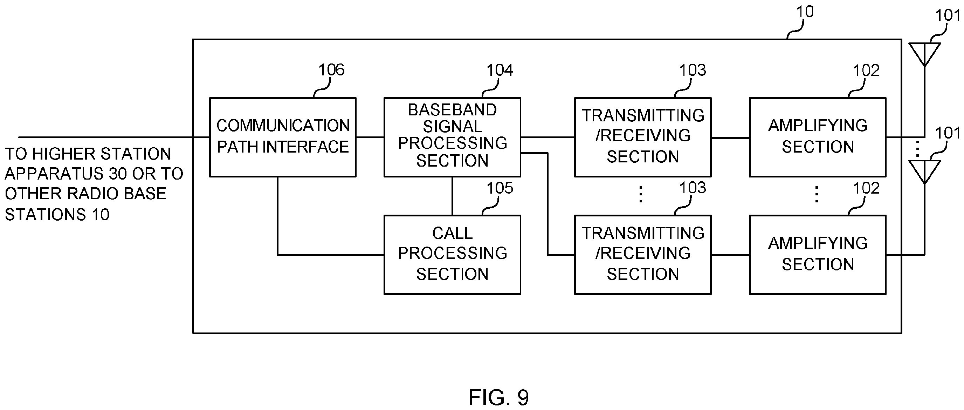

Fig. 9 is a diagram illustrating an example of an overall configuration of the radio base station according to the present embodiment. The radio base station 10 includes a plurality of transmitting/receiving antennas 101, amplifying sections 102 and transmitting/receiving sections 103, a baseband signal processing section 104, a call processing section 105 and a communication path interface 106. Note that one or more transmitting/receiving antennas 101, an amplifying section 102, and a transmitting/receiving section 103 may be provided.

User data to be transmitted from the radio base station 10 to a user terminal 20 on the downlink is input from the higher station apparatus 30 to the base band signal processing section 104, via the communication path interface 106.

In the base band signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving section 103.

The transmitting/receiving section 103 converts a base band signal, which is pre-coded for each antenna and output from the base band signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving section 103 can be constituted by a transmitter/receiver, a transmitting/receiving circuit or transmitting/receiving apparatus that can be described based on general understanding of the technical field to which the present disclosure pertains. Note that a transmitting/receiving section 103 may be configured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying section 102. The transmitting/receiving section 103 receives the uplink signals amplified in the amplifying section 102. The received signals are converted into the base band signal through frequency conversion in the transmitting/receiving section 103 and output to the base band signal processing section 104.

In the base band signal processing section 104, user data that is included in the uplink signals that are input is subjected to a fast Fourier transform (FFT) process, an inverse discrete Fourier transform (IDFT) process, error correction decoding, a MAC retransmission control reception process, and RLC layer and PDCP layer reception processes, and forwarded to the higher station apparatus 30 via the communication path interface 106. The call processing section 105 performs call processing (such as setting up and releasing) on communication channels, manages the state of the radio base stations 10 and manages the radio resources.

The communication path interface 106 transmits and receives signals to and from the higher station apparatus 30 via a given interface. Also, the communication path interface 106 may transmit and receive signals (backhaul signaling) with other radio base stations 10 via an interbase station interface (which is, for example, optical fiber that is in compliance with the CPRI (Common Public Radio Interface), the X2 interface, etc.).

Note that the transmitting/receiving section 103 may further include an analog beam forming section that performs analog beam forming. The analog beam forming section can be constituted by an analog beam forming circuit (for example, a phase shifter, a phase shift circuit) or an analog beam forming apparatus (for example, a phase shifter) described based on general understanding of the technical field to which the present invention pertains. Further, the transmitting/receiving antenna 101 may be composed of an array antenna, for example.

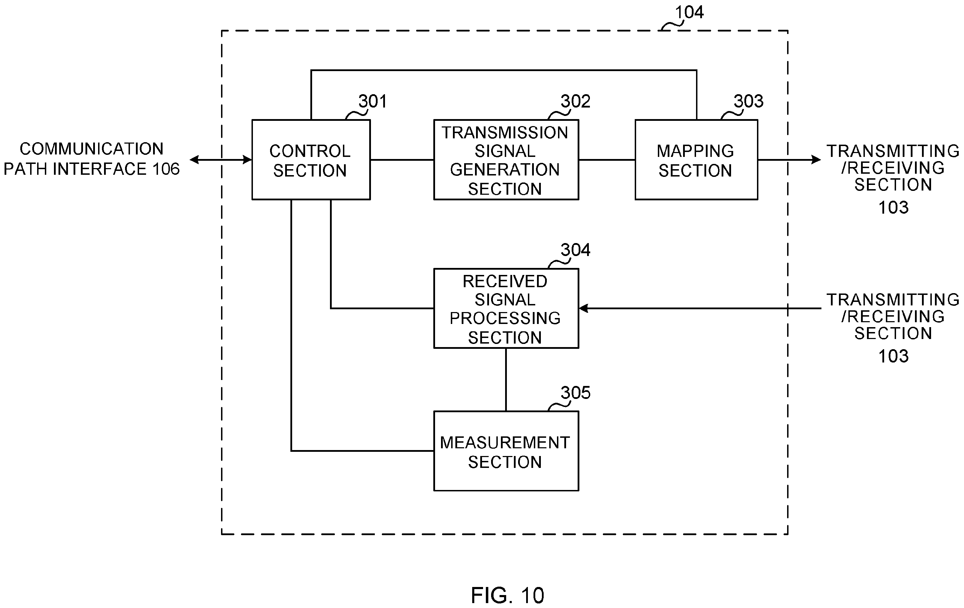

Fig. 10 is a diagram illustrating an example of a functional configuration of the radio base station according to the present embodiment. Note that, although this example will primarily show functional blocks that pertain to characteristic parts of the present embodiment, the radio base station 10 may be assumed to have other functional blocks that are necessary for radio communication as well.

The base band signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the base band signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal reception processes in the received signal processing section 304, the measurements of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgment information). The control section 301 controls the generation of downlink control signals, downlink data signals and the like, based on the results of deciding whether or not retransmission control is necessary for uplink data signals, and the like.

The control section 301 controls the scheduling of synchronization signals (for example, the PSS (Primary Synchronization Signal)/SSS (Secondary Synchronization Signal)), SSB, downlink reference signals (for example, the CRS, the CSI-RS, and the DMRS) and the like.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), uplink reference signals, and the like.

The control section 301 may perform control to form a Tx beam and/or a reception beam using a digital BF (for example, precoding) in the base band signal processing section 104 and/or an analog BF (for example, phase rotation) in the transmitting/receiving section 103. The control section 301 may perform control to form the beams based on downlink propagation path information, uplink propagation path information, and the like. These pieces of propagation path information may be acquired from the received signal processing section 304 and/or the measurement section 305.

The transmission signal generation section 302 generates downlink signals (downlink control signals, downlink data signals, downlink reference signals and the like) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates DL assignments, which notify downlink data allocation information, and/or UL grants, which notify uplink data allocation information, based on instructions from the control section 301. DL assignments and UL grants are both DCI, and follow the DCI format. Also, the downlink data signals are subjected to the coding process, the modulation process and the like, by using coding rates and modulation schemes that are determined based on, for example, channel state information (CSI) reported from each user terminal 20.

The mapping section 303 maps the downlink signals generated in the transmission signal generation section 302 to given radio resources based on instructions from the control section 301, and outputs these to the transmitting/receiving section 103. The mapping section 303 can be constituted by a mapper, a mapping circuit or mapping apparatus that can be described based on general understanding of the technical field to which the present disclosure pertains.

The received signal processing section 304 performs reception processes (for example, demapping, demodulation, decoding and the like) of received signals that are input from the transmitting/receiving section 103. Here, the received signals include, for example, uplink signals (uplink control signals, uplink data signals, uplink reference signals, etc.) that are transmitted from the user terminals 20. The received signal processing section 304 can be constituted by a signal processor, a signal processing circuit or signal processing apparatus that can be described based on general understanding of the technical field to which the present disclosure pertains.

The received signal processing section 304 outputs, to the control section 301, information decoded by the reception process. For example, when a PUCCH to contain an HARQ-ACK is received, the received signal processing section 304 outputs this HARQ-ACK to the control section 301. Also, the received signal processing section 304 outputs the received signals, the signals after the reception processes and the like, to the measurement section 305.

The measurement section 305 conducts measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and the like, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), propagation path information (for example, CSI), and the like. The measurement results may be output to the control section 301.

Note that the transmitting/receiving section 103 may transmit the downlink control information (DCI) (DL assignment, UL grant, and the like).

Further, the transmitting/receiving section 103 may transmit the downlink shared channel that is repeatedly transmitted in a given type (for example, the first type, the second type, or the hybrid type). Further, the transmitting/receiving section 103 may transmit the DCI used for scheduling all the repetitions of the downlink shared channel. Further, the transmitting/receiving section 103 may transmit the DCI used for repeatedly scheduling the downlink shared channel for each given number of times.

Further, the transmitting/receiving section 103 transmits information on the repetition transmission of either the first type or the second type in the given unit (for example, a cell, a cell group, a PUCCH group, a BWP, or an HPN within the given range) (first aspect).

In addition, the control section 301 may control switching of at least one of the types of repetition transmission (first and third aspects).

Further, the control section 301 may control the repetition transmission of the downlink shared channel. Specifically, the control section 301 may control the repetition transmission of the downlink shared channel in a given type (for example, the first type, the second type, or the hybrid type) (first to third aspects).

### <User Terminal>

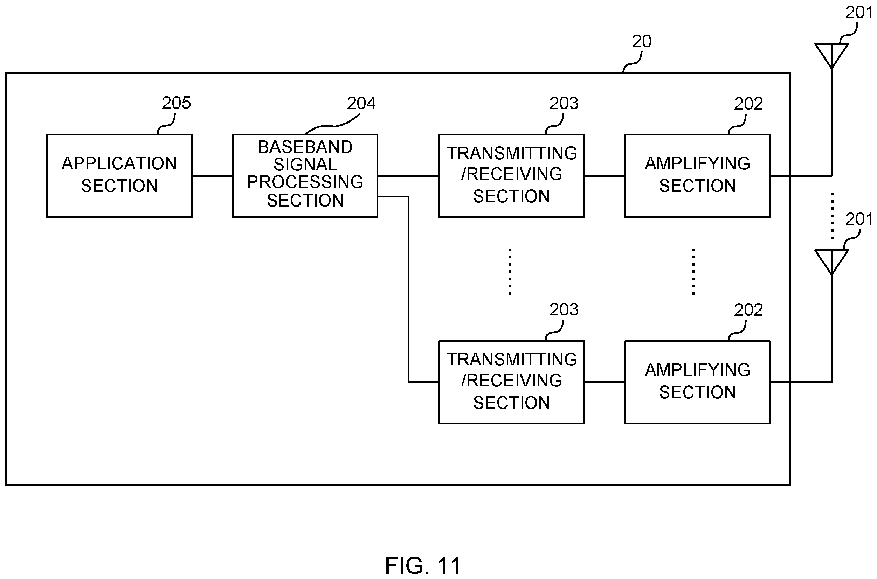

Fig. 11 is a diagram illustrating an example of an overall configuration of the user terminal according to the present embodiment. The user terminal 20 includes a plurality of transmitting/receiving antennas 201, amplifying sections 202 and transmitting/receiving sections 203, a baseband signal processing section 204 and an application section 205. Note that one or more transmitting/receiving antennas 201, an amplifying section 202, and a transmitting/receiving section 203 may be provided.

Radio frequency signals that are received in the transmitting/receiving antennas 201 are amplified in the amplifying section 202. The transmitting/receiving section 203 receives the downlink signal amplified in the amplifying section 202. The transmitting/receiving section 203 performs frequency conversion for the received signal into base band signal, and outputs the base band signal to the base band signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be configured as a transmitting/receiving section in one entity, or may be constituted by a transmitting section and a receiving section.

The base band signal processing section 204 performs reception processes for the base band signal that is input, including an FFT process, error correction decoding, a retransmission control reception process and the like. Downlink user data is forwarded to the application section 205. The application section 205 performs processes related to higher layers above the physical layer and the MAC layer and the like. Also, in the downlink data, the broadcast information can be also forwarded to the application section 205.

Meanwhile, uplink user data is input from the application section 205 to the base band signal processing section 204. The base band signal processing section 204 performs a retransmission control transmission process (for example, an HARQ transmission process), channel coding, precoding, a discrete Fourier transform (DFT) process, an IFFT process and the like, and the result is forwarded to the transmitting/receiving section 203.

Base band signals that are output from the base band signal processing section 204 are converted into a radio frequency band in the transmitting/receiving section 203 and transmitted. The radio frequency signals having been subjected to frequency conversion in the transmitting/receiving section 203 are amplified in the amplifying section 202, and transmitted from the transmitting/receiving antennas 201.

Note that the transmitting/receiving section 203 may further include an analog beam forming section that performs analog beam forming. The analog beam forming unit may be composed of an analog beam forming circuit (for example, a phase shifter, a phase shift circuit) or an analog beam forming device (for example, a phase shifter), which is described based on common understanding in the technical field according to the present invention. Further, the transmitting/receiving antenna 201 may be composed of an array antenna, for example.

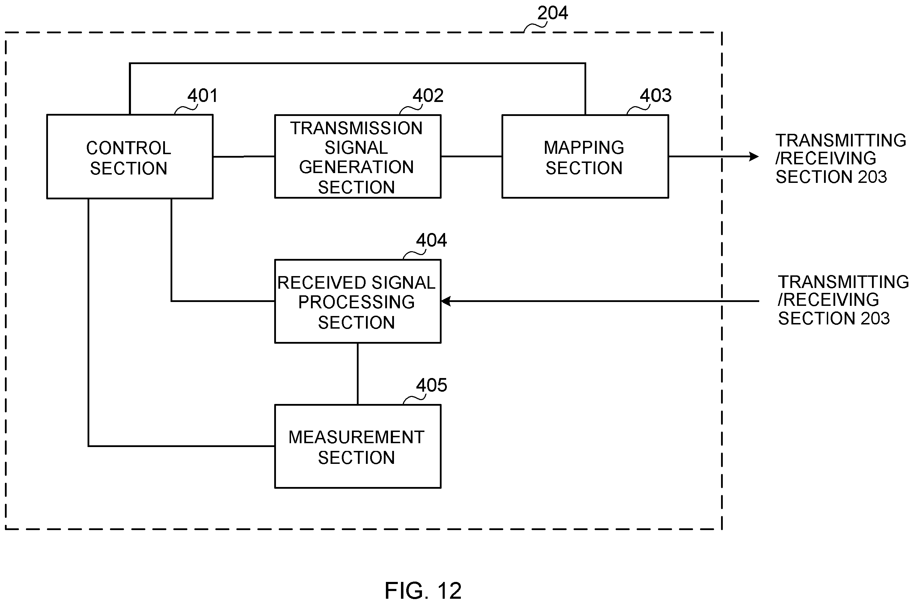

Fig. 12 is a diagram illustrating an example of a functional configuration of the user terminal according to the present embodiment. Note that, although this example will primarily show functional blocks that pertain to characteristic parts of the present embodiment, it may be assumed that the user terminals 20 have other functional blocks that are necessary for radio communication as well.

The base band signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the base band signal processing section 204.

The control section 401 controls the whole of the user terminal 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and the like. Furthermore, the control section 401 controls the signal reception processes in the received signal processing section 404, the measurements of signals in the measurement section 405 and the like.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and the like.

The control section 401 may perform control to form a Tx beam and/or a reception beam using a digital BF (for example, precoding) in the base band signal processing section 204 and/or an analog BF (for example, phase rotation) in the transmitting/receiving section 203. The control section 401 may perform control to form the beams based on downlink propagation path information, uplink propagation path information and the like. These pieces of propagation path information may be acquired from the received signal processing section 404 and/or the measurement section 405.

Further, when the control section 401 acquires various information notified from the radio base station 10 from the received signal processing section 404, the control section 401 may update the parameter used for control based on the information.

The transmission signal generation section 402 generates uplink signals (uplink control signals, uplink data signals, uplink reference signals, etc.) based on instructions from the control section 401, and outputs these signals to the mapping section 403. The transmission signal generation section 402 can be constituted by a signal generator, a signal generating circuit or signal generation apparatus that can be described based on general understanding of the technical field to which the present disclosure pertains.

For example, the transmission signal generation section 402 generates uplink control signals such as delivery acknowledgment information, channel state information (CSI) and the like, based on instructions from the control section 401. Also, the transmission signal generation section 402 generates uplink data signals based on instructions from the control section 401. For example, when a UL grant is included in a downlink control signal that is notified from the radio base station 10, the control section 401 commands the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs reception processes (for example, demapping, demodulation, decoding and the like) of received signals that are input from the transmitting/receiving section 203. Here, the received signals include, for example, downlink signals (downlink control signals, downlink data signals, downlink reference signals, and the like) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the reception processes to the control section 401. The received signal processing section 404 outputs, for example, broadcast information, system information, RRC signaling, DCI, and the like, to the control section 401. Also, the received signal processing section 404 outputs the received signals and/or the signals after the reception processes to the measurement section 405.

The measurement section 405 conducts measurements with respect to the received signals. For example, the measurement section 405 may perform same frequency measurement and/or different frequency measurement for one or both of the first carrier and the second carrier. When the serving cell is included in the first carrier, the measurement section 405 may perform the different frequency measurement in the second carrier based on a measurement instruction acquired from the received signal processing section 404. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and the like based on the received signals. The measurement section 405 may measure the received power (for example, RSRP), the received quality (for example, RSRQ, SINR, SNR, etc.), the signal strength (for example, RSSI), propagation path information (for example, CSI), and the like. The measurement results may be output to the control section 401.

Note that the transmitting/receiving section 203 may receive the downlink control information (DCI) (DL assignment, UL grant, and the like).

Further, the transmitting/receiving section 203 may receive the downlink shared channel that is repeatedly transmitted in a given type (for example, the first type, the second type, or the hybrid type). Further, the transmitting/receiving section 203 may receive the DCI used for scheduling all the repetitions of the downlink shared channel. Further, the transmitting/receiving section 203 may receive the DCI used for repeatedly scheduling the downlink shared channel for each given number of times.

Further, the transmitting/receiving section 203 transmits information on the repetition transmission of either the first type or the second type in the given unit (for example, a cell, a cell group, a PUCCH group, a BWP, or an HPN within the given range) (first aspect).

In addition, the control section 401 may control switching of at least one of the types of repetition transmission (first and third aspects).

Further, the control section 401 may control the reception process of the downlink shared channel repeatedly transmitted. Specifically, the control section 401 may control the reception process of the downlink shared channel repeatedly transmitted in a given type (for example, the first type, the second type, or the hybrid type) (first to third aspects).

Specifically, when receiving the information on the first type of repetition transmission, the control section 401 may control the reception process of the downlink shared channel based on the state of the transmission configuration indication (TCI) common between the repetitions (first aspect).

In addition, when receiving the information on the second type of repetition transmission, the control section 401 may control the reception process of the downlink shared channel based on the state of the transmission configuration indication (TCI) for each repetition (first aspect).

Further, the control section 401 may not assume that the type of repetition transmission is switched when the repetition transmission is started (third aspect and behavior of the first UE).

Further, the control section 401 may assume that at least one of the type and parameter of repetition transmission is switched even when the repetition transmission is started (third aspect and behavior of the second UE).

Further, when receiving the downlink shared channel that is repeated in both the time domain and the frequency domain, the control section 401 may control the reception process of the downlink shared channel based on the state of the transmission configuration indication (TCI) for each given number of repetitions in either the time domain or the frequency domain(second aspect).

### <Hardware Configuration>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

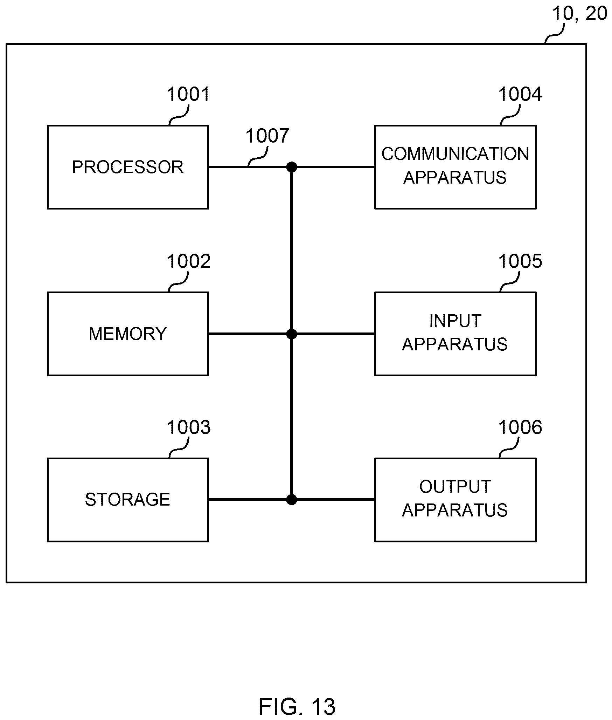

For example, the radio base station, user terminals, and the like according to the embodiment of the present disclosure may function as a computer that executes the processes of the radio communication method of the present disclosure. Fig. 13 is a diagram illustrating an example of a hardware configuration of the radio base station and the user terminal according to one embodiment. Physically, the above-described radio base stations 10 and user terminals 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit," "device," "unit" and the like. Note that the hardware configuration of a radio base station 10 and a user terminal 20 may be designed to include one or more of each apparatus illustrated in the drawings, or may be designed not to include part of the apparatus.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 causes the processor 1001 to perform computation by reading a given software (program) on hardware such as the processor 1001 and the memory 1002, and is implemented by controlling communication via the communication apparatus 1004, and controlling at least one reading and writing of data on the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and the like. For example, the above-described base band signal processing section 104 (204), call processing section 105 and the like may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations described in the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (main storage device)" and the like. The memory 1002 can store a program (program code), a software module, and the like, which are executable for implementing the radio communication method according to the embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and the like), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and the like in order to implement, for example, at least one of frequency division duplex (FDD) and time division duplex (TDD). For example, the above-described transmitting/receiving antennas 101 (201), amplifying section 102 (202), transmitting/receiving section 103 (203), communication path interface 106, and the like may be implemented by the communication apparatus 1004.

The input apparatus 1005 is an input device for receiving input from the outside (for example, a keyboard, a mouse, a microphone, a switch, a button, a sensor and the like). The output apparatus 1006 is an output device for allowing output to the outside (for example, a display, a speaker, an LED (Light Emitting Diode) lamp, and the like). Note that the input apparatus 1005 and the output apparatus 1006 may be provided in an integrated configuration (for example, a touch panel).

Furthermore, these pieces of apparatus, including the processor 1001, the memory 1002 and the like are connected by the bus 1007 so as to communicate information. The bus 1007 may be formed with a single bus, or may be formed with buses that vary between pieces of apparatus.

Also, the radio base station 10 and the user terminal 20 may be configured to include hardware such as a microprocessor, a digital signal processor (DSP), an ASIC (Application-Specific Integrated Circuit), a PLD (Programmable Logic Device), an FPGA (Field Programmable Gate Array) and the like, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as an RS, and may be referred to as a pilot, a pilot signal, and the like, depending on which standard applies. Furthermore, a "component carrier (CC)" may be referred to as a "cell," a "frequency carrier," a "carrier frequency" and the like.

A radio frame may be comprised of one or more periods (frames) in the time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) that is not dependent on numerology.

Here, the numerology may be a communication parameter used for at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, a specific windowing processing performed by the transceiver in the time domain, and the like.

A slot may be comprised of one or more symbols in the time domain (OFDM (Orthogonal Frequency Division Multiplexing) symbols, SC-FDMA (Single Carrier Frequency Division Multiple Access) symbols, and the like). Also, a slot may be a time unit based on numerology.

A slot may include a plurality of mini slots. Each mini slot may be comprised of one or more symbols in the time domain. Also, a mini slot may be referred to as a "subslot." Each mini slot may be comprised of fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B."

A radio frame, a subframe, a slot, a mini slot and a symbol all represent the time unit in signal communication. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)," or a plurality of consecutive subframes may be referred to as a "TTI," or one slot or one mini slot may be referred to as a "TTI." That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and the like, instead of a "subframe."

Here, a TTI refers to the minimum time unit of scheduling in radio communication, for example. For example, in LTE systems, a radio base station schedules the radio resources (such as the frequency bandwidth and transmit power that can be used in each user terminal) to allocate to each user terminal in TTI units. Note that the definition of TTIs is not limited to this.

The TTI may be the transmission time unit of channel-encoded data packets (transport blocks), code blocks, codewords and the like, or may be the unit of processing in scheduling, link adaptation and the like. When TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be called usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be, for example, 12. The number of subcarriers included in the RB may be determined based on the numerology.

Also, an RB may include one or more symbols in the time domain, and may be one slot, one mini slot, one subframe or one TTI in length. One TTI and one subframe each may be comprised of one or more resource blocks.

Note that one or more RBs may be referred to as a "physical resource block (PRB (Physical RB))," a "subcarrier group (SCG)," a "resource element group (REG)," a "PRB pair," an "RB pair" and the like.

Furthermore, a resource block may be comprised of one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by an index of RBs based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured in one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations pertaining to the number of subframes included in a radio frame, the number of slots included in a subframe or a radio frame, the number of mini slots included in a slot, the number of symbols and RBs included in a slot or a mini slot, the number of subcarriers included in an RB, the number of symbols in a TTI, the symbol length, the length of cyclic prefixes (CPs) and the like can be variously changed.

Also, the information and parameters described in the present disclosure may be represented in absolute values or in relative values with respect to given values, or may be represented using other applicable information. For example, a radio resource may be specified by a given index.

The names used for parameters and the like in the present disclosure are in no respect limiting. In addition, an equation and the like using these parameters may differ from those explicitly disclosed in the present disclosure. Since various channels (PUCCH (Physical Uplink Control Channel), PDCCH (Physical Downlink Control Channel) and the like) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed in a control table. The information, signals, and the like that are input and/or output can be overwritten, updated, or appended. The information, signals, and the like that are output may be deleted. The information, signals and the like that are input may be transmitted to other pieces of apparatus.

The notification of information is by no means limited to the aspects/embodiments described in the present disclosure, and may be performed using other methods. For example, notification of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and the like), MAC (Medium Access Control) signaling and the like), and other signals and/or combinations of these.

Note that physical layer signaling may be referred to as "L1/L2 (Layer 1/Layer 2) control information (L1/L2 control signals)," "L1 control information (L1 control signal)" and the like. Also, RRC signaling may be referred to as RRC messages, and can be, for example, an RRC connection setup (RRCConnectionSetup) message, RRC connection reconfiguration (RRCConnectionReconfiguration) message, and the like. Also, MAC signaling may be notified using, for example, MAC control elements (MAC CEs (Control Elements)).

Also, notification of given information (for example, notification of information to the effect that "X holds") does not necessarily have to be sent explicitly, and can be sent implicitly (for example, by not notifying this piece of information, by notifying another piece of information, and the like).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, commands, information and the like may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "transmit power", "phase rotation", "antenna port", "layer", "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier," may be used interchangeably. The base station may be called a term such as a macro cell, a small cell, a femto cell, a pico cell, and the like.

The base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRH: Remote Radio Head)). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other suitable terms.

At least one of a base station and a mobile station may be referred to as transmitting apparatus, receiving apparatus and the like. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes an apparatus that does not necessarily move during a communication operation.

Furthermore, the radio base stations in the present disclosure may be interpreted as user terminals. For example, each aspect/embodiment of the present disclosure may be applied to a configuration in which communication between a radio base station and a user terminal is replaced by communication among a plurality of user terminals (which may be referred to as, for example, D2D (Device-to-Device), V2X (Vehicle-to-Everything) and the like). In this case, the user terminals 20 may have the functions of the radio base stations 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user terminals in the present disclosure may be interpreted as radio base stations. In this case, the radio base stations 10 may have the functions of the user terminals 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and the like may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and the like that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next generation systems that are enhanced based on these. Further, a plurality of systems may be combined and applied (for example, a combination of LTE or LTE-A and 5G) .

The phrase "based on" as used in the present disclosure does not mean "based only on", unless otherwise specified. In other words, the phrase "based on" means both "based only on" and "based at least on."

Reference to elements with designations such as "first," "second" and the like as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "determining" as used in the present disclosure may encompass a wide variety of actions. For example, "determining" may be regarded as "determining" of judging, calculating, computing, processing, deriving, investigating, looking up (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and the like.

In addition, to "judge" and "determine" as used herein may be interpreted to mean making judgements and determinations related to resolving, selecting, choosing, establishing, comparing and the like. In other words, to "judge" and "determine" as used herein may be interpreted to mean making judgements and determinations related to some action.

In addition, to "judge" and "determine" as used herein may be interpreted to mean "assuming", "expecting", "considering" and the like.

The term "maximum transmit power" described in the present disclosure may mean the maximum value of transmit power, the nominal UE maximum transmit power, or the rated UE maximum transmit power.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." It should be noted that the term may mean "A and B are each different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. A user terminal, comprising:
a receiving section that receives information on a repetition transmission of either a first type or a second type in a given unit; and
a control section that controls a reception process of a downlink shared channel in the given unit based on the information.

2. The user terminal according to claim 1, wherein when the information is related to the first type of repetition transmission, the control section controls the reception process of the downlink shared channel based on a state of a transmission configuration indication (TCI) common between repetitions.

3. The user terminal according to claim 1 or 2, wherein when the information is related to the second type of repetition transmission, the control section controls the reception process of the downlink shared channel based on the state of the transmission configuration indication (TCI) for each repetition.

4. The user terminal according to any one of claims 1 to 3, wherein the control section does not assume switching of the type of repetition transmission when the repetition transmission is started.

5. The user terminal according to any one of claims 1 to 3, wherein the control section assumes switching of at least one of the type and parameter of the repetition transmission even when the repetition transmission is started.

6. A user terminal, comprising:
a receiving section that receives a downlink shared channel that is repeated in both a time domain and a frequency domain; and
a control section that controls a reception process of the downlink shared channel based on a state of a transmission configuration indication (TCI) for each given number of repetitions of either the time domain or the frequency domain.
